Europäisches Patentamt

European Patent Office

Office européen des brevets

(11) Publication number: **0 302 036**
**A1**

(12) **EUROPEAN PATENT APPLICATION**

(21) Application number: **88850256.4**

(22) Date of filing: **25.07.88**

(51) Int. Cl.⁴: **A 01 G 17/10**

(30) Priority: **29.07.87 NO 873177**

(43) Date of publication of application:
**01.02.89 Bulletin 89/05**

(84) Designated Contracting States:
**AT BE CH DE ES FR GB GR IT LI LU NL SE**

�popupApplicant: **Kristensen, Thorbjörn**
**Toppdalsveien 164**
**N-4740 Tveit (NO)**

(72) Inventor: **Kristensen, Thorbjörn**
**Toppdalsveien 164**
**N-4740 Tveit (NO)**

(74) Representative: **Roth, Ernst Adolf Michael et al**
**GÖTEBORGS PATENTBYRA AB Box 5005**
**S-402 21 Göteborg (SE)**

(54) **A weight for shaping the branches of a fruit tree.**

㉗ A weight for shaping branches of fruit trees, berry-bearing shrub, and the like to achieve low umbrella-like plants. Said weight comprises a weight (5) proper with an attached cord (7) of a pliable non-elastic material, preferably metal, which is coated with a soft material (8). The coating material (8) may be a foamed plastic with closed cells. The weight may have a clear blue colour. In a preferred embodiment coating material (8) has a thickness of at least five times the diameter of cord (7).

*FIG.2*

EP 0 302 036 A1

## Description

## A weight for shaping the branches of a fruit tree

The present invention relates to a weight for shaping branches of fruit trees, berry-bearing shrub and other plants.

A fruit tree, e.g. an apple tree, will grow into an approximate shape of a reversed cone unless it is artificially shaped. The trees will become relatively high and carry a large percentage of the fruit on the uppermost portion of the tree. It will be difficult to harvest such a tree, since many of the apples cannot be picked from ground level. It will, thus, be necessary to use a ladder or other equipment to reach up to the uppermost portion of the tree. Due to the shape of such a tree only a very limited part of the tree or the fruit will be subjected to direct sunshine. Due to the height of the tree fruit trees must be planted at large intervals, commonly approximately 10 m, to prevent the trees from shading each other. Because there is poor supply of direct sunlight quite a few apples will not develop to high quality, which is very negative to the fruit growers economy. Also, expenses for picking the fruit will be high.

It is, obviously possible to achieve much improved results with a tree that is shaped by having its branches bent down towards the ground during the first part of its growing period. By having its branches bent down towards the ground the tree will assume an umbrella-like shape, and a much larger portion of the tree and, thus, the fruit will receive direct sunlight. Additionally, the tree may be kept much lower, e.g. approximately 2 m high. Since trees with such a shape will not shade each other much they may be planted closer to each other, e.g. with no more than 3 m between them. In this manner the area for cultivation is more efficiently exploited. The result is a larger amount of fruit pr unit area, better fruit, simplified and less expensive harvesting and, thus, better economy for the trade.

Bending down branches is achieved by suspending weights or branch weights from the thin pliable branches when a young tree is planted, so that said branches are curved down towards the ground. Already after about one year this downward curved shape of the branches will be permanent, and the weights may be removed.

No suitable weights for shaping branches of fruit trees are previously known. Various provisional measures were used, e. g. string which was anchored in the ground and secured to the branches, various kinds of weights which were lashed to the branches by the aid of wire, and the like, clothes-pegs to attach weights, and the like.

It was a trying and time consuming task to fasten all these known means to the branches. Additionally, they caused damage to the branches which may readily develop into cancer and other disease of the tree.

It is, thus, an object of the present invention to provide a weight which eliminates the above mentioned disadvantages and which is readily secured to the branches, does not damage them and sits firmly on the branches, although it may readily be removed and used again.

According to the invention this is achieved by the fact that a weight is provided with a cord of a pliable non-elastic material, preferably made from metal, which is coated with a soft material. By the expression pliable non-elastic is ment that the cord may readily be bent and will maintain its bent shape. Details and further features of the invention will appear from the dependent claims.

The invention is disclosed in more detail below with reference to the drawings.

Figure 1 shows a recently planted tree provided with weights according to the invention,

Figure 2 shows a preferred embodiment of a weight according to the invention

Figure 3 shows an enlarged section of Figure 1, and

Figure 4 shows the finished shape of a fruit tree after use of weights according to the invention.

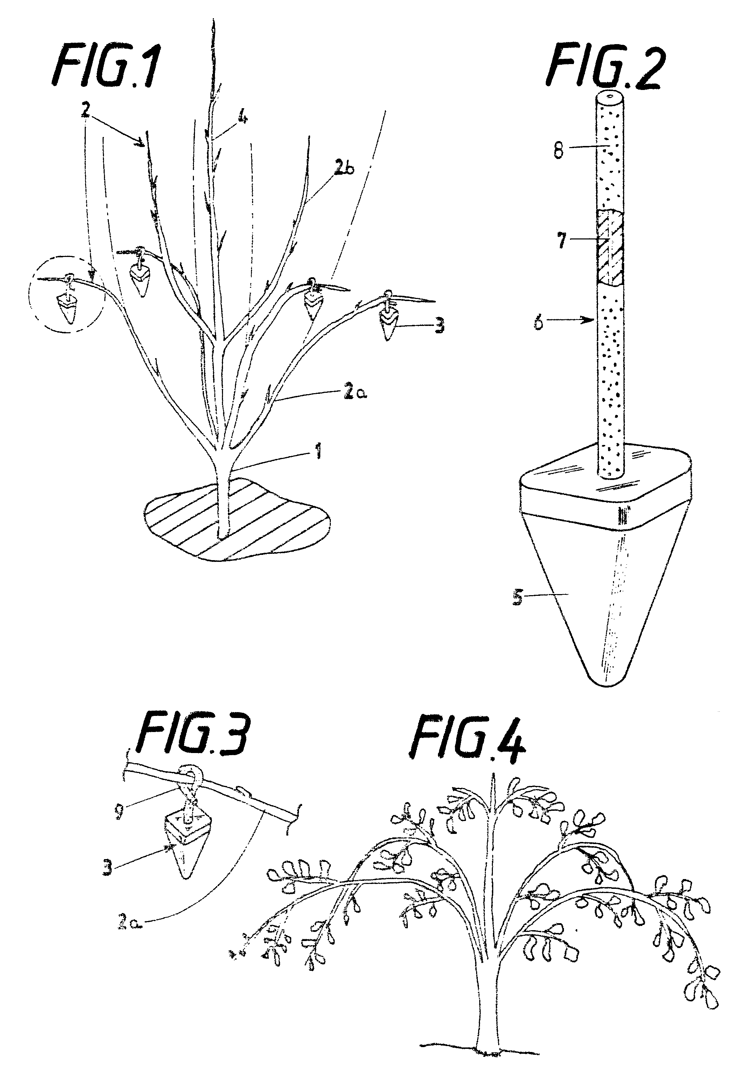

A fruit tree 1 has upright branches 2 at the time it is planted. If no shaping of the tree is carried out it will continue to grow upwards and as a fully grown tree will have the approximate shape of a reversed cone. In order to achieve an approximate umbrella-shaped tree, as shown in Figure 4, weights 3 are suspended at least from the lower branches 2a. If the upper branches 2b are to be used as well weights are suspended from them too. The top 4 of the tree is cut so as not to be higher than approximately 2 m.

The weight according to the invention consists of a weight member 5 weighing approximately 100 g in case of weights for bending down branches on young trees. If an older tree is to be shaped heavier weights may be used. Weight 5 may be manufactured from concrete which is coloured throughout, e.g. having a clear blue colour. Suspension stem 6 may be of the same colour. It is anchored, e.g. cast into weight 5 and consists of a central cord 7 of a pliable non-elastic material, preferably metal, e.g. a wire of soft iron or annealed copper, or the like. Such a material can readily be bent and will maintain its shape after being bent without flexing back. Any suitable material having the said properties may, however, be used for a cord. Outside cord 7 there is a coat 8 of a soft material. Suitable materials are foamed plastic with closed cells. A very desirable property is that the material does not absorb moisture, so as to prevent damages on the bark due to constant moisture. Coating 8 may be integrated with cord 7, e.g. by manufacturing the foamed plastic on the cord, or the coating may be a separate part of said soft material and may be applied to the cord 7 by inserting the latter.

When a branch, e.g. 2a, is to be shaped a weight according to the invention is suspended from the outside portion of the branch by placing the fastening member 6 across the branch and bending it into a loop 9 or the like, as shown in Figure 3. Due to the properties of cord 7 the weight will be firmly suspended from the branch without damaging the latter. Due to the soft coating 8 the bark will not be damaged even when weight 3 is moved in the wind. Cord 7 is selected to make loop 9 extend gradually as the branch grows. The preferred clear blue colour will scare birds away, resulting in reduced damage of fruit and berries because of birds. This is of special importance in case of cherries.

**Claims**

1. A weight for shaping branches of fruit trees, berrybearing shrub, and the like, **characterized in** that a weight (5) is provided with a cord (7) made from a pliable non-elastic material, preferably metal, which is coated with a soft material (8).

2. A weight as defined in claim 1, **characterized in** that the coating material (8) is water repellent.

3. A weight as defined in claim 1 or 2, **characterized in** that the coating material (8) is a foamed plastic material having closed cells.

4. A weight as defined in one or several of the preceding claims, **characterized in** that the coating material (8) has a thickness of at least 5 times the diameter of cord (7).

5. A weight as defined in claims 1-3, **characterized in** that it has a clear blue colour all over or partly.

0302036

FIG.1

2

4

2b

3

2a

1

FIG.2

8

7

6

5

FIG.3

9

3

2a

FIG.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | BE-A- 628 818 (T'HOOFT) <br> * Page 3, last paragraph - page 4, paragraph 2; page 4, paragraph 4; figures 3,4,5,7 * | 1 | A 01 G 17/10 |
| Y | | 2 | |
| Y | DE-B-1 065 654 (ALBER) <br> * Column 1, paragraph 4; column 2, paragraph 2 * | 2 | |
| A | DE-A-3 517 703 (HECKELMANN) <br> * Page 2, lines 5-12; page 4, lines 12-33; figures 1-4 * | 1 | |
| A | DE-A-1 940 744 (SCHWERTER DRAHTWERKE) <br> * Claims 1,4; figures 1,2 * | 3 | |

TECHNICAL FIELDS SEARCHED (Int. Cl.4)

A 01 G

The present search report has been drawn up for all claims

| Place of search | Date of completion of the search | Examiner |
|---|---|---|
| THE HAGUE | 02-11-1988 | HERYGERS J.J. |

EPO FORM 1503 03.82 (P0401)